# FASCICULE DE BREVET EUROPEEN

(11) **EP 1 733 915 B1**
(45) Date de publication et mention de la délivrance du brevet: **03.09.2008**
(21) Numéro de dépôt: 06300495.6
(22) Date de dépôt: 19.05.2006
(51) Int. Cl.: B60N 2/015, B60N 2/36

(54) **Dispositif de maintien en position d'un siège de véhicule automobile**
Lagerung eines Kraftfahrzeugssitzes
Device for holding in position a vehicle seat

(30) Priorité: 15.06.2005 FR 0551633
(43) Date de publication de la demande: 20.12.2006
(73) Titulaire: RENAULT S.A.S., 92100 Boulogne Billancourt (FR)
(72) Inventeur: Jamois, Jean Marc, 95870, BEZONS (FR); Conde, Iglésias Manuel, 78140, VELIZY VILLACOUBLAY (FR)

(56) Documents cités:
- DE-A1- 4 026 519
- FR-A- 2 775 228
- FR-A- 2 803 562
- US-A- 5 803 549

## Description

La présente invention concerne un dispositif de maintien en position d'un siège de véhicule automobile. Elle concerne plus particulièrement un dispositif de maintien en position d'un siège de véhicule automobile, dans lequel un boîtier est solidaire d'un élément de carrosserie du véhicule, des moyens de guidage formés dans le boîtier étant aptes d'une part à recevoir un moyen d'indexage solidaire du siège et d'autre part à amener ce moyen d'indexage en position de butée, des moyens de blocage permettant en outre le blocage du moyen d'indexage dans cette position de butée.

Un siège de véhicule automobile nécessite d'être fixé à la structure du véhicule pour offrir une assise confortable au passager et pour permettre d'autre part une tenue du siège en cas de choc subi par le véhicule.

Un problème connu est d'offrir un blocage vertical du siège pour l'empêcher de remonter sous l'effet d'un choc, puisque le siège est amené en position dans le véhicule sensiblement selon cette direction verticale, de haut en bas cette fois.

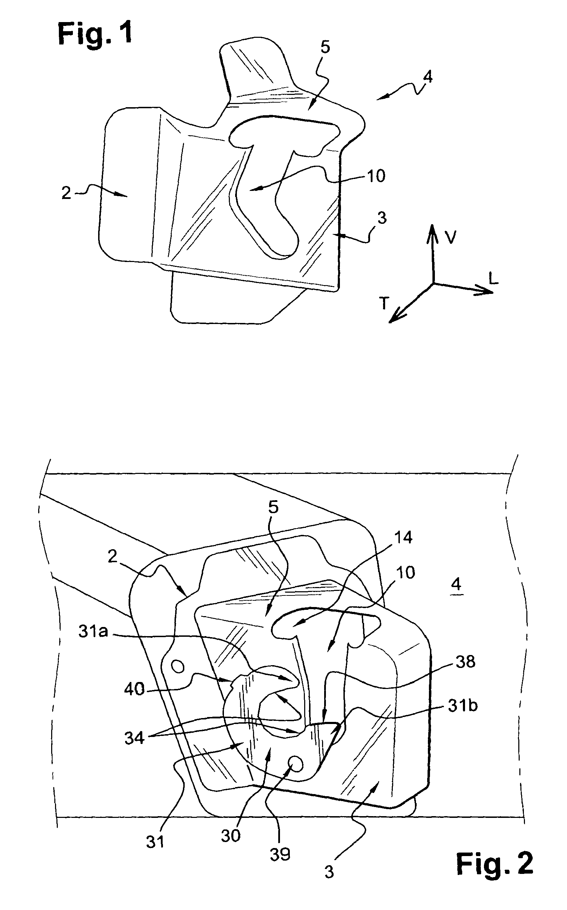

Dans ce but, des moyens de guidage sont formés dans un boîtier solidaire de la structure du véhicule, ces moyens de guidage comprenant une rainure dans le boîtier dont la forme permet d'une part la mise en position du siège par un opérateur qui fait suivre le chemin de la rainure au siège pour l'amener en position de butée, et permet d'autre part un blocage du siège sous un effort vertical. Des rainures de ce type peuvent présenter un chemin de guidage tel que représenté à la figure 1.

Les documents DE 40 26 519 et FR 2775 228 présentent des moyens de maintien en position formés d'un crochet apte à bloquer le moyen d'indexage du siège dans sa position de butée, conformément au préambule de la revendication 1.

Le dispositif de maintien en position selon l'invention vise à proposer un dispositif qui permette à la fois un positionnement simplifié du siège et une retenue de ce siège dans des directions horizontales sans pénaliser la retenue verticale du fauteuil.

Pour répondre à ces objectifs, l'invention propose un dispositif de maintien possédant les caractéristiques de la revendication 1.

Selon différentes caractéristiques de la présente invention :
- le moyen d'indexage pousse sur l'élément d'entraînement, lorsque cet élément d'entraînement est en regard des moyens de guidage, l'action du moyen d'indexage provoquant l'escamotage de l'élément d'entraînement et la mise en position de l'élément de blocage en regard des moyens de guidage.
- l'élément d'entraînement est une surface d'entraînement plane formée par l'extrémité inférieure du crochet, cette surface étant disposé dans un plan sensiblement perpendiculaire par rapport à la direction principale des moyens de guidage, lorsque cette surface est en regard du moyen de guidage.
- l'axe de rotation des moyens de blocage est disposé de sorte que la distance entre l'extrémité inférieure du crochet et l'axe de rotation est plus petite que la distance entre l'extrémité supérieure du crochet et l'axe de rotation.
- les moyens de blocage sont disposés à l'intérieur du boîtier.
- les moyens de blocage sont disposés à l'extérieur du corps creux formé par le boîtier.
- les moyens de guidage sont munis d'un ergot apte à permettre la mise en mouvement manuel des moyens de blocage.

L'invention porte également sur un véhicule automobile qui comprend au moins un dispositif de maintien en position d'un siège, tel que décrit précédemment.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un dispositif de maintien en position selon l'état de la technique;
- la figure 2 est une représentation schématique d'un dispositif de maintien en position selon l'invention, vue depuis l'intérieur du véhicule ;
- la figure 3 est une vue représentant le dispositif selon la figure 2, lors de la mise en position du siège;
- la figure 4 est une vue représentant le dispositif selon la figure 2, dans une position de butée de l'invention.

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représenté sur la figure 2, un boîtier 2 est fixé sur un élément de carrosserie du véhicule. A titre d'exemple, cet élément de carrosserie est un passage de roue 4 situé latéralement au niveau des places arrière du véhicule. Le boîtier 2 présente une paroi extérieure 3 s'étendant sensiblement longitudinalement et verticalement, à distance du passage de roue 4, et relié au passage de roue 4 par au moins une paroi supérieure 5, de sorte que le boîtier 2 forme un corps creux, la paroi extérieure 3 étant la paroi la plus à l'intérieur du véhicule.

Le rôle de ce boîtier 2 est de porter les éléments permettant la mise en position et le maintien en position du siège par rapport à la carrosserie. Le boîtier 2 porte ainsi des moyens de guidage 10 aptes d'une part à recevoir un moyen d'indexage 20 solidaire du siège et d'autre part à guider ce moyen d'indexage 20 vers une position de butée, et le boîtier 2 porte également des moyens de blocage 30 aptes à bloquer ce moyen d'indexage 20 lorsque celui-ci se trouve dans sa position de butée. Le boîtier 2 est avantageusement formé par une pièce emboutie, ce qui apporte de la raideur supplémentaire pour la tenue du siège.

Un moyen d'indexage 20 du siège est formé à titre d'exemple par l'axe d'articulation du dossier de siège sur l'assise du siège. Il sera toutefois compris que tout autre moyen d'indexage conviendrait à l'invention.

Les moyens de guidage 10 comprennent une rainure 12 formée dans la paroi extérieure 3 du boîtier 2. Cette rainure 12 est, telle que représentée, sensiblement verticale et présente une largeur de dimension légèrement supérieure au diamètre du moyen d'indexage 20 du siège. La mise en position du siège se fait par le coulissement du moyen d'indexage 20 le long de la rainure 12 des moyens de guidage 10. L'orientation verticale de cette rainure 12 permet une mise en position aisée du siège par rapport à la carrosserie. Afin que le moyen d'indexage 20 ne s'échappe pas transversalement des moyens de guidage 10, le moyen d'indexage 20 est muni à son extrémité libre d'une tête 21 de dimension supérieure à la largeur de la rainure. Les moyens de guidage 10 comprennent alors sur la paroi supérieure 5 du boîtier 2 un orifice 14 de dimension apte à permettre à cette tête 21 du moyen d'indexage 20 de se glisser à l'intérieur du boîtier 2, derrière la paroi extérieure 3.

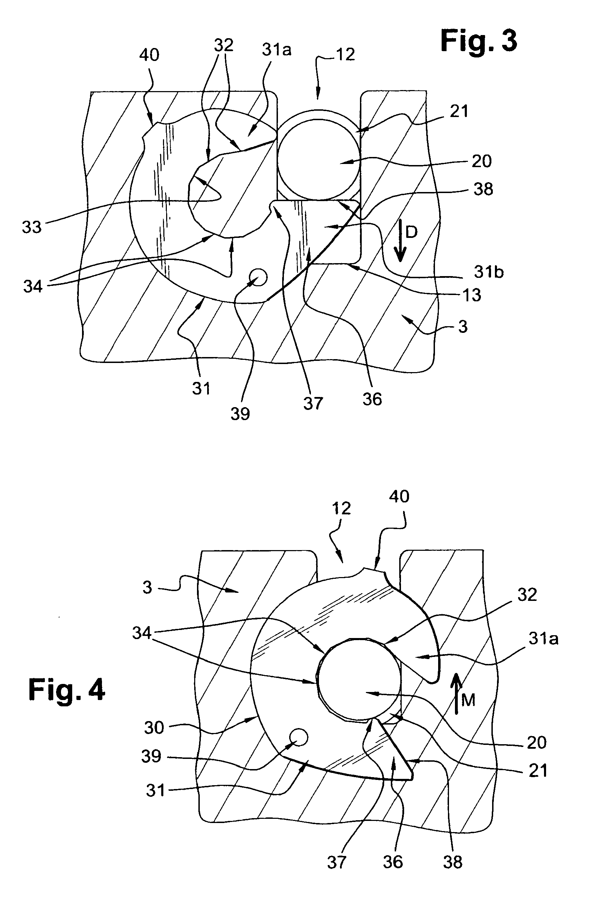

Les moyens de blocage 30 permettent de bloquer en position le moyen d'indexage 20 lorsque ce moyen d'indexage 20 est amené au fond 13 de la rainure 12, en position de butée. Tel que représenté à titre d'exemple à la figure 4, les moyens de blocage 30 présentent un élément d'arrêt 32 pouvant être positionné en regard des moyens de guidage 10, c'est-à-dire en travers du chemin de guidage formé par la rainure 12. Lors d'un choc subi par le véhicule, et si le siège est soumis à un effort sensiblement vertical, le moyen d'indexage 20 est amené à suivre la rainure 12 pour accompagner le déplacement du siège vers le haut. L'élément d'arrêt 32 disposé en travers du chemin formé par la rainure 12 empêche alors cette remontée du moyen d'indexage 20 et par conséquent la remontée du siège associé.

Toutefois, l'élément d'arrêt 32 ne peut être présent en permanence en travers du chemin de guidage formé par la rainure 12, car un tel agencement empêcherait la mise en position préalable du siège et du moyen d'indexage 20 associé en butée de la rainure 12. L'élément d'arrêt 32 est ainsi formé sur un crochet 31 monté à rotation de sorte que l'élément d'arrêt 32 puisse dans un premier temps être escamoté pour permettre le passage du moyen d'indexage 20 vers sa position de butée, puis dans un deuxième temps être disposé en travers du chemin formé par la rainure 12 pour bloquer verticalement le siège et le moyen d'indexage 20 associé dans leur position de butée.

Les moyens de blocage 30 sont dimensionnés pour que la rotation du crochet 31 soit rendue facile dans un premier sens et plus dure dans le sens opposé. Il est en effet important que la rotation de l'élément d'arrêt 32 soit facilitée pour l'amener en position en travers du chemin du moyen d'indexage 20 lorsque ce moyen d'indexage 20 est en position de butée, et que dans le même temps la rotation de l'élément d'arrêt 32, lorsqu'il joue son rôle de verrouiller verticalement le moyen d'indexage 20, soit plus difficile à réaliser dans le sens du déblocage du moyen d'indexage 20.

A cet effet, le crochet 31 présente à son extrémité inférieure un élément d'entraînement 36 qui se trouve initialement en travers du chemin de guidage formé par la rainure 12 lorsque le moyen d'indexage 20 n'est pas encore inséré dans les moyens de guidage 10. L'élément d'entraînement 36 présente une surface d'entraînement 38 sensiblement plane qui, tel que représenté à titre d'exemple à la figure 3, est initialement sensiblement perpendiculaire ou légèrement inclinée par rapport à la direction verticale de la rainure 12 pour que l'effort généré par la poussée du moyen d'indexage 20 sur la surface d'entraînement 38 aille dans le sens d'une amplification du mouvement. La poussée du moyen d'indexage 20 sur la surface d'entraînement 38 entraîne l'escamotage de l'élément d'entraînement 36 hors du chemin de guidage formé par la rainure 12, ce qui permet d'une part le passage du moyen d'indexage 20 vers sa position de butée, et ce qui permet d'autre part la mise en position de l'élément d'arrêt 32 en travers de la rainure 12 et du passage du moyen d'indexage 20.

Afin d'optimiser ces différents mouvements, le crochet 31 selon l'invention présente une forme générale qui permet une rotation des éléments d'arrêt 32 et d'entraînement 36 de type excentrique. L'axe de rotation 39 est ainsi positionné de sorte que l'effort vertical à fournir par le moyen d'indexage 20, pour soulever l'élément d'arrêt 32 et bouger le crochet 31, doit être plus grand que l'effort à fournir par le moyen d'indexage 20 sur la surface d'entraînement 38 pour abaisser cette surface 38 et bouger le crochet 31. L'axe de rotation 39 est positionné sur le boîtier 2 à proximité et à un niveau inférieur au fond 13 de la rainure 12 formant les moyens de guidage 10, et sur le crochet 31 à proximité de l'élément d'entraînement 36.

Tel que représenté, le crochet 31 est formé d'un demi cercle, l'élément d'arrêt 32 étant formé par la surface intérieure 33 du demi cercle, tandis que l'élément d'entraînement 36 est formé par l'extrémité libre inférieure 31b du crochet. Ce crochet 31 est disposé verticalement en forme de « C » de sorte que l'élément d'arrêt 32 soit positionné verticalement à un niveau plus haut que l'élément d'entraînement 36. La surface intérieure 33 présente une forme générale apte à venir entourer le moyen d'indexage 20. Cette surface 33 peut à titre d'exemple être formée de différentes facettes planes 34 dont l'agencement génère une forme globale sensiblement cylindrique de l'élément d'arrêt 32. La présence de ces facettes planes 34 permet d'éviter le glissement du moyen d'indexage 20 dans l'élément d'arrêt 32 et d'assurer ainsi le blocage en position du moyen d'indexage 20 et du siège associé. De plus, l'extrémité libre supérieure 31a du crochet 31 s'étend transversalement en avant du chemin de guidage formé par la rainure 12, de sorte qu'un contre poids inertiel est généré autour de la partie supérieure du moyen d'indexage 20, cette inertie s'opposant à la remontée du moyen d'indexage 20 lorsqu'il est en position de butée. Il sera compris que l'élément d'arrêt 32 est principalement formé par la partie supérieure de la surface intérieure 33 du crochet 31, et par la butée formée entre l'une des facettes planes 34 et l'extrémité libre supérieure 31a.

La figure 3 représente le dispositif dans un cas où le siège est amené en position par l'opérateur, le moyen d'indexage 20 associé au siège étant amené vers sa position de butée. Le mouvement crée est un mouvement de descente du moyen d'indexage 20, tel que représenté par la flèche D. Ce moyen d'indexage 20 a ainsi tendance à pousser sur la surface d'entraînement 38, ce qui crée un déplacement initial vers le bas de l'élément d'entraînement 36, ce déplacement initial étant transformé en un mouvement de rotation du crochet 31. Ce mouvement de rotation du crochet 31 permet la mise en position de l'élément d'arrêt 32, qui vient recouvrir et entourer le moyen d'indexage 20 pendant que celui-ci vient prendre position en butée contre le fond 13 de la rainure 12. L'inclinaison faible de la surface d'entraînement 38 par rapport à la direction verticale de la rainure 12, et la position de l'axe de rotation 39 proche de l'élément d'entraînement 36, permettent une rotation aisée du crochet 31 sous la contrainte manuelle de l'opérateur. Il sera compris que les formes du crochet 31 sont étudiées et que les moyens de rotation sont dimensionnés pour que le crochet 31 puisse rester dans cette position initiale présentée à la figure 3 jusqu'à ce que l'opérateur amène le moyen d'indexage 20 dans les moyens de guidage 10, et pour permettre en particulier le maintien en position de l'élément d'arrêt 32 hors du chemin de guidage formé par la rainure 12 jusqu'à ce que le moyen d'indexage 20 atteigne sa position de butée.

Tel que représenté sur les figures 3 et 4, un bossage 37 est réalisé entre la surface d'entraînement 38 et la surface intérieure 33 du crochet 31. Le mouvement de descente du moyen d'indexage 20 initie le mouvement de rotation du crochet 31, et l'escamotage de la surface d'entraînement 38. La coopération du moyen d'indexage 20 et du bossage 37, au cours de ce mouvement de descente, favorise une accélération du mouvement de l'ensemble, ce qui permet d'une part une mise en place plus rapide et moins contraignante du moyen d'indexage 20 dans sa position de butée, et d'autre part une rotation complète du crochet 31. Cette rotation complète est nécessaire pour que l'extrémité libre supérieure 31a passe en totalité de l'autre côté du moyen d'indexage, et pour que le moyen d'indexage 20 soit au contact de différentes facettes planes 34. C'est cette double condition qui permet à l'élément d'arrêt 31 de bloquer en rotation le moyen d'indexage 20.

La figure 4 représente le dispositif dans le cas où le moyen d'indexage 20 est en position de butée. La rotation du crochet 31 a positionné l'élément d'arrêt 32 au dessus du moyen d'indexage 20, le rôle de cet élément d'arrêt 32 étant alors de bloquer le moyen d'indexage 20 et de l'empêcher de remonter, même lorsqu'un mouvement de montée du siège est crée par un choc, tel que représenté par la flèche M. Le moyen d'indexage 20 associé au siège a ainsi tendance à pousser sous la partie supérieure de la surface intérieure 33 du crochet 31, au contact respectivement de plusieurs facettes planes 34.

Tel que représenté sur les figures 2 à 4, les moyens de blocage 30 sont disposés à l'extérieur du boîtier 12. Il sera compris que les moyens de blocage 30 peuvent être disposés à l'intérieur du boîtier 12, entre la paroi extérieure 3 du boîtier 2 et le passage de roue 4. Dans ces deux cas, l'axe de rotation 39 est porté par la paroi extérieure 3 du boîtier 2. Une rondelle intercalaire non représentée peut être disposé autour de l'axe de rotation 39 entre le crochet 31 et la paroi extérieure 3 pour empêcher le blocage en rotation du crochet 31 contre le boîtier 2, cette rondelle pouvant être réalisée en un matériau plastique, et par exemple en téflon. Le rôle de cette rondelle intercalaire est d'une part de créer un jeu de fonctionnement entre le crochet 31 et le boîtier 2, et d'autre part d'éviter le collage de l'un sur l'autre lors du passage du véhicule en cataphorèse par exemple.

L'objectif des moyens de blocage 30 est de prévenir le déverrouillage du moyen d'indexage 20 lorsque celui-ci et le siège associé sont en position de butée. Toutefois, il peut être prévu un moyen de déblocage manuel pour permettre une opération sur ce siège en après vente par exemple. A cet effet, le crochet 31 présente un ergot 40, situé sur le pourtour extérieur de l'élément d'arrêt 32. Un opérateur pourra alors utiliser un levier pour agir sur cet ergot 40 et forcer la rotation du crochet 31 pour dégager l'élément d'arrêt 32 du chemin formé par la rainure 12.

## Revendications

1. Dispositif de maintien en position d'un siège de véhicule automobile, dans lequel un boîtier (2) est solidaire d'un élément de carrosserie du véhicule et forme un corps creux, une paroi extérieure (3) du boîtier (2) s'étendant à l'opposé de l'élément de carrosserie, et dans lequel des moyens de guidage (10) sont formés d'au moins une rainure (12) réalisée dans la paroi extérieure (3) du boîtier (2), ces moyens de guidage (10) étant aptes d'une part à recevoir un moyen d'indexage (20) solidaire du siège et d'autre part à amener ce moyen d'indexage (20) en position de butée, et dans lequel des moyens de blocage (30) permettent en outre le blocage du moyen d'indexage (20) dans cette position de butée, les moyens de blocage (30) comprenant au moins un élément d'entraînement (36) pouvant être en regard des moyens de guidage (10) de sorte à pouvoir accompagner le moyen d'indexage (20) vers sa position de butée, et un élément d'arrêt (32) pouvant être en regard des moyens de guidage (10) de sorte à pouvoir bloquer le moyen d'indexage (20) lorsque ce moyen d'indexage (20) est dans sa position de butée, ces moyens de blocage (30) étant formés d'un crochet (31) monté à rotation autour d'un axe de rotation (39) solidaire de la paroi extérieure (3) du boîtier (2), **caractérisé en ce que** l'élément d'arrêt (32) est formé par la surface intérieure (33) du crochet (31) et par l'extrémité supérieure (31a) de ce crochet (31), et **en ce que** la surface intérieure (33) du crochet (31) est formée de différentes facettes planes (34) dont l'agencement génère une forme globale sensiblement cylindrique de l'élément d'arrêt (32).

2. Dispositif selon la revendication 1, **caractérisé en ce que** le moyen d'indexage (20) pousse sur l'élément d'entraînement (36), lorsque cet élément d'entraînement (36) est en regard des moyens de guidage (10), l'action du moyen d'indexage (20) provoquant l'escamotage de l'élément d'entraînement (36) et la mise en position de l'élément d'arrêt (32) en regard des moyens de guidage (10).

3. Dispositif selon la revendications 1 ou 2, **caractérisé en ce que** l'élément d'entraînement (36) est une surface d'entraînement (38) sensiblement plane formée par l'extrémité inférieure (31b) du crochet (31), la surface d'entraînement (38) étant disposée dans un plan sensiblement perpendiculaire par rapport à la direction principale des moyens de guidage (10), lorsque cette surface (38) est en regard des moyens de guidage (10).

4. Dispositif selon l'une des revendications 1 à 3, **caractérisé en ce que** l'axe de rotation (39) des moyens de blocage (30) est disposé de sorte que la distance entre l'extrémité inférieure (31b) du crochet (31) et l'axe de rotation (39) est plus petite que la distance entre l'extrémité supérieure (31a) du crochet (31) et l'axe de rotation (39).

5. Dispositif selon l'une des revendications 1 à 4, **caractérisé en ce que** les moyens de blocage (30) sont disposés à l'intérieur du boîtier (2).

6. Dispositif selon l'une des revendications 1 à 4, **caractérisé en ce que** les moyens de blocage (30) sont disposés à l'extérieur du corps creux formé par le boîtier (2).

7. Dispositif selon l'une des revendications précédentes, **caractérisé en ce que** les moyens de guidage (10) sont munis d'un ergot (40) apte à permettre la mise en mouvement manuel des moyens de blocage (30).

8. Véhicule automobile comportant un dispositif de maintien en position selon l'une des revendications précédentes.

## Claims

1. Device for holding a motor vehicle seat in position, in which a casing (2) is secured to a part of the bodywork of the vehicle and forms a hollow body, an exterior wall (3) of the casing (2) extending opposite the part of the bodywork, and in which guide means (10) are formed of at least one slot (12) made in the exterior wall (3) of the casing (2), these guide means (10) being capable, on the one hand, of accepting an indexing means (20) secured to the seat and, on the other hand, of bringing this indexing means (20) into a position of abutment, and in which locking means (30) can further lock the indexing means (20) in this position of abutment, the locking means (30) comprising at least one drive element (36) that can face the guide means (10) so as to be able to accompany the indexing means (20) into its position of abutment, and a stop element (32) that can face the guide means (10) so as to be able to lock the indexing means (20) when this indexing means (20) is in its position of abutment, these locking means (30) being formed of a hook (31) mounted such that it can rotate about a pivot pin (39) secured to the exterior wall (3) of the casing (2), **characterized in that** the stop element (32) is formed by the interior surface (33) of the hook (31) and by the top end (31a) of this hook (31), and **in that** the interior surface (33) of the hook (31) is formed of various planar facets (34) the layout of which gives the stop element (32) a substantially cylindrical overall shape.

2. Device according to Claim 1, **characterized in that** the indexing means (20) pushes on the drive element (36) when this drive element (36) is facing the guide means (10), the action of the indexing means (20) retracting the drive element (36) and bringing the stop element (32) into position facing the guide means (10).

3. Device according to Claim 1 or 2, **characterized in that** the drive element (36) is a substantially planar drive surface (38) formed by the bottom end (31b) of the hook (31), the drive surface (38) being positioned in a plane substantially perpendicular to the main direction of the guide means (10) when this surface (38) is facing the guide means (10).

4. Device according to one of Claims 1 to 3, **characterized in that** the pivot pin (39) about which the locking means (30) rotate is positioned in such a way that the distance between the bottom end (31b) of the hook (31) and the pivot pin (39) is shorter than the distance between the top end (31a) of the hook (31) and the pivot pin (39).

5. Device according to one of Claims 1 to 4, **characterized in that** the locking means (30) are positioned inside the casing (2).

6. Device according to one of Claims 1 to 4, **characterized in that** the locking means (30) are positioned outside the hollow body formed by the casing (2).

7. Device according to one of the preceding claims, **characterized in that** the guide means (10) are fitted with a lug (40) to allow the locking means (30) to be moved by hand.

8. Motor vehicle comprising a position-maintaining device according to one of the preceding claims.

## Patentansprüche

1. Lagerung eines Kraftfahrzeugsitzes, bei der ein Gehäuse (2) fest mit einem Karosserieelement des Fahrzeugs verbunden ist und einen Hohlkörper bildet, wobei sich eine Außenwand (3) des Gehäuses (2) dem Karosserieelement entgegengesetzt erstreckt, und bei der Führungsmittel (10) aus mindestens einer Rille (12), die in der Außenwand (3) des Gehäuses (2) hergestellt ist, ausgebildet sind, wobei diese Führungsmittel (10) einerseits ein Positionierungsmittel (20), das fest mit dem Sitz verbunden ist, aufnehmen können und andererseits dieses Positionierungsmittel (20) in Anschlagstellung bringen können, und bei der Blockiermittel (30) ferner das Blockieren des Positionierungsmittels (20) in dieser Anschlagstellung erlauben, wobei die Blockiermittel (30) mindestens ein Antriebselement (36) aufweisen, das sich gegenüber den Führungsmitteln (10) derart befinden kann, dass es das Positionierungsmittel (20) zu seiner Anschlagstellung begleiten kann, und ein Stoppelement (32), das gegenüber den Führungsmitteln (10) derart sein kann, dass es das Positionierungsmittel (20) blockieren kann, wenn dieses Positionierungsmittel (20) in seiner Anschlagstellung ist, wobei die Blockiermittel (30) aus einem Haken (31) ausgebildet sind, der drehend um eine Rotationsachse (39) installiert ist, die fest mit der Außenwand (3) des Gehäuses (2) verbunden ist, **dadurch gekennzeichnet, dass** das Stoppelement (32) durch die Innenfläche (33) des Hakens (31) und durch das obere Ende (31a) dieses Hakens (31) ausgebildet wird, und dass die Innenfläche (33) des Hakens (31) aus unterschiedlichen ebenen Facetten (34) ausgebildet ist, deren Anordnung eine globale, im Wesentlichen zylindrische Form des Stoppelements (32) ergibt.

2. Vorrichtung nach Anspruch 1, **dadurch gekennzeichnet, dass** das Positionierungsmittel (20) das Antriebsmittel (36) schiebt, wenn sich dieses Antriebsmittel (36) gegenüber den Führungsmitteln (10) befindet, wobei die Aktion des Positionierungsmittels (20) das Einziehen des Antriebselements (36) und das Positionieren des Stoppelements (32) gegenüber den Führungsmitteln (10) bewirkt.

3. Vorrichtung nach Anspruch 1 oder 2, **dadurch gekennzeichnet, dass** das Antriebselement (36) eine im Wesentlichen ebene Antriebsfläche (38) ist, die von dem unteren Ende (31b) des Hakens (31) gebildet wird, wobei die Antriebsfläche (38) in einer Ebene im Wesentlichen senkrecht zu der Hauptrichtung der Führungsmittel (10) angeordnet ist, wenn sich diese Fläche (38) gegenüber den Führungsmitteln (10) befindet.

4. Vorrichtung nach einem der Ansprüche 1 bis 3, **dadurch gekennzeichnet, dass** die Rotationsachse (39) der Blockiermittel (30) derart angeordnet ist, dass die Entfernung zwischen dem unteren Ende (31b) des Hakens (31) und der Rotationsachse (39) kleiner ist als die Entfernung zwischen dem oberen Ende (31a) des Hakens (31) und der Rotationsachse (39).

5. Vorrichtung nach einem der Ansprüche 1 bis 4, **dadurch gekennzeichnet, dass** die Blockiermittel (30) im Inneren des Gehäuses (2) angeordnet sind.

6. Vorrichtung nach einem der Ansprüche 1 bis 4, **dadurch gekennzeichnet, dass** die Blockiermittel (30) außerhalb des Hohlkörpers, der von dem Gehäuse (2) gebildet wird, angeordnet sind.

7. Vorrichtung nach einem der vorhergehenden Ansprüche, **dadurch gekennzeichnet, dass** die Führungsmittel (10) mit einem Dorn (40) versehen sind, der das manuelle Inbewegungsetzen der Blockiermittel (30) erlaubt.

8. Kraftfahrzeug, das eine Vorrichtung zur Lagerung nach einem der vorhergehenden Ansprüche aufweist.
